# EUROPEAN PATENT SPECIFICATION

(11) **EP 1 862 986 B1**
(45) Date of publication and mention of the grant of the patent: **14.07.2010**
(21) Application number: 06010980.8
(22) Date of filing: 29.05.2006
(51) Int. Cl.: G08G 1/14, G07B 15/02, G10L 15/28

(54) **Method of retrieving vehicle related information from a parking right database and mobile querying device adapted for carrying out such a method**
Methode zum Zurückholen fahrzeugbezogener Informationen aus einer Parkrechtdatenbank und mobile Abfragevorrichtung angepasst für die Durchführung eines solchen Verfahrens
Procédé pour extraire des informations relatives à un véhicule d'une base de données de droits de stationnement et dispositif mobile adapté pour mener à bien un tel procédé

(43) Date of publication of application: 05.12.2007
(73) Proprietor: Parkmobile Group B.V., 1112 XR Diemen (NL)
(72) Inventor: Veltenaar, Rudolf, 6957 AX Laag Soeren (NL)
(74) Representative: Dohmen, Johannes Maria Gerardus

(56) References cited:
- EP-A- 1 229 504
- WO-A-01/88856
- WO-A-03/065312
- WO-A2-01/99053
- WO-A2-2005/067592
- US-B1- 6 393 403

## Description

The present invention relates to a method of retrieving vehicle related information from a parking right database, said method comprising the steps of: providing vehicle identification data of a vehicle to a mobile querying device, said mobile querying device being arranged for remotely accessing said parking right database; remotely and digitally providing said vehicle identification data to said parking right database through a data telecommunications network, using said mobile querying device, for retrieving said vehicle related information from said parking right database.

The present invention further relates to a mobile querying device for use in a method as described above.

A method similar as described above is for example described in international patent application nr. WO 2005/067592. This document discloses a voice recognition system and method for an officer in the field to safely, efficiently, and quickly run license plate numbers and collect license plate numbers is provided. The system is voice operated and is arranged for retrieving vehicle information from a central host.

European patent number EP 0 812 448, which enables verification of the existence of a valid parking right for a parked vehicle by means of scanning an identification code from said vehicle using scanning means. The identification code is provided to the parking right database by remote transmission thereof.

A method as described in above, suffers from various disadvantages, and inconvenience for the user of such a system. In particular, a traffic warden using scanning means for scanning identification codes of a vehicle always has to carry the scanning means with him. These scanning means, have a weight of approximately 500 gram to 1 kilogram. This leads to inconveniences when a large number of vehicles has to be verified in, for instance, a large area with cars with digital parking rights, like electronic resident permits or tags from mobile phone parkers. A traffic warden carries around the scanner, and for each vehicle he/she has to direct the scanner to e.g. a tag on the vehicle. This becomes not only cumbersome, but also leads to more serious safety and health problems for traffic wardens performing this task on a frequent basis. It has for example lead to all kinds of medical problems in the area of the shoulders, the elbows and/or wrists.

Another disadvantage is that the use of scanning means for scanning, for example, radio frequency identifcation cards (RFID cards), is only possible if the scanner is brought in close proximity to the car. If the vehicle is not parked in such way that it is easy or straightforward for the traffic warden to bring the scanning means near the RFID card, this will cause problems for the traffic warden. In particular, if the RFID card is placed on one side of the vehicle, and the car is parked such that the RFID card is placed on the side of the vehicle facing the road, the traffic warden may see himself forced to scan the identification code by standing on the road itself. This will be contradictory to all kinds of safety regulations, and will put the traffic warden in a unsafe position.

Another, more structural problem is the fact that the use of scanning means is experienced to be quite inaccurate. In approximately 50% of the cases of scanning Vehicle Registration Plates (VRN), the scanning means will provide an incorrect identification code for the vehicle, and this figure becomes even worse at night, without the presence of daylight. Additionally, the presence of too much daylight, in a very sunny environment, may also cause errors in scanning the identification code, because of the presence of too much reflected light.

In respect of the above, it will be clear that the use of scanning means for identifying identification codes of vehicles for verifying the existence of a valid parking right, suffers from various disadvantages.

### Summary of the invention

It is an object of the present invention to overcome the above-mentioned problems with the prior art.

It is an other object of the present invention to provide a method for verifying the existence of a valid parking right for a parked vehicle, which is reliable and efficient for the person making the verification, such that a large number of vehicles can be checked against the parking right database easily.

These and other objects are achieved by the present invention. The scope of the invention is defined by the appended claims.

There is provided a method of retrieving vehicle related information from a parking right database, as defined in independent claim 1.

The invention is based on the insight, that the vehicle can most easily be identified by its licence plate, and that problems of the prior art can be easily overcome by the traffic warden reading up the licence plate number of the vehicle. As will be clear, it would be another disadvantage and it would also be very expensive if a voice communication channel between a mobile querying device and a database would have to be kept alive for providing the voice signal to parking right database. Additionally, if use is made of a data telecommunications network for providing the voice signal to the central parking right database, the voice signal should be converted to a sound file, which sound file would have to be transferred to the database. This would require large amounts much bandwidth of data network.

Since both these options would be too expensive, and technically too demanding, the invention is based on the further insight that recognition of the voice signal can already be performed in the mobile querying tool, such that only the characters of the licence plate would have to be provided digitally (converted from voice to digital characters) to the central parking right database using the data communications network. The characters of the licence plate only form a limited amount of data, which can be easily sent over a data telecommunications network against little costs and using only a very small amount of bandwidth. As will be understood, instead of reading out the characters of a licence plate of a vehicle, a traffic warden may alternatively read any other identification code, such as an identification code of a parking licence visible on the vehicle.

According to an embodiment of the present invention, the vehicle identification data is assembled by said mobile querying device by means of speech recognition of said voice signal. It will be recognized by the skilled person that all kinds of speed recognition techniques are available nowadays, that may advantageously be applied in a method of the present invention for assembling vehicle identification data from the voice signal.

According to another embodiment of the present invention said vehicle related information is provided by said parking right database in the form of digital parking right data. The parking right database may for example provide the status of a parked vehicle in the form of a simple code: 1 = valid parking right, 0 = invalid parking right. As will be appreciated, a more sophisticated code, providing more information about the existing parking right, could also be used alternatively.

According to another embodiment of the present invention, the digital parking right data provided by the database to the mobile querying tool, is used in the mobile querying tool for assembling an output speech signal for the traffic warden. In particular, this speech signal may be outputted on a loud speaker, or the traffic warden may carry around a headset through which licence plate information can be provided to the mobile querying device, and at the same time the output speech signal can be provided back to the traffic warden. This would provide a hands free solution for verifying the existence of valid parking rights in the area.

According to another embodiment, the location information provided to the mobile querying device may either be performed by the user of the mobile querying device, e.g. by reading out an identifier for the area where the vehicle is parked, or the mobile querying tool may be arranged for determining its position. In the latter case, the mobile querying device may include positioning means, such as satellite based positioning means (global positioning system (GPS) or Galileo).

It will be understood by the skilled person, that the mobile querying device may for example use history information for determining gaps in the signal strength of the data telecommunications signal. For instance if a traffic warden enters a certain region where no communication signal from the data telecommunications network is available, the mobile querying device may store this information in its memory, and when the traffic warden approaches the area a second time, the mobile querying tool may start downloading parking right database records in advance. These parking right database records can be stored in a local database and can be used by the mobile querying device for verifying the validity of parking rights if the parking right database itself cannot be reached.

As the skilled person will understand, the above may be dependent on measuring the signal strength, and on comparing the signal strength to a threshold value. If the signal strength is smaller than said threshold value, it is considered that the data telecommunications network is not available locally.

In accordance with another embodiment of the present invention, the mobile querying device is arranged for setting up a telephone call in an area where the data telecommunications network is not available. In particular, if the regular method of the present invention cannot be applied because of loss of signal strength of the data telecommunications network, the mobile querying device may simply be arranged for setting up a regular mobile telephone call, such as a GSM based telephone call, and the voice signal from the traffic warden may simply be provided over the telephone call. Alternatively, the mobile querying device simply only provides the digital data signal via the regular telephone call to the central database. In the latter option, there is no need to include voice recognition means in the parking rights database.

According to a second aspect of the present invention, there is provided a mobile querying device for use in the method as described above, as defined in independent claim 12.

The invention shall now further be elucidated by means of some specific examples thereof, and by reference to the enclosed drawings, wherein:
figure 1 illustrates an environment wherein the invention is used; and
figure 2 shows a mobile querying device in accordance with the invention.

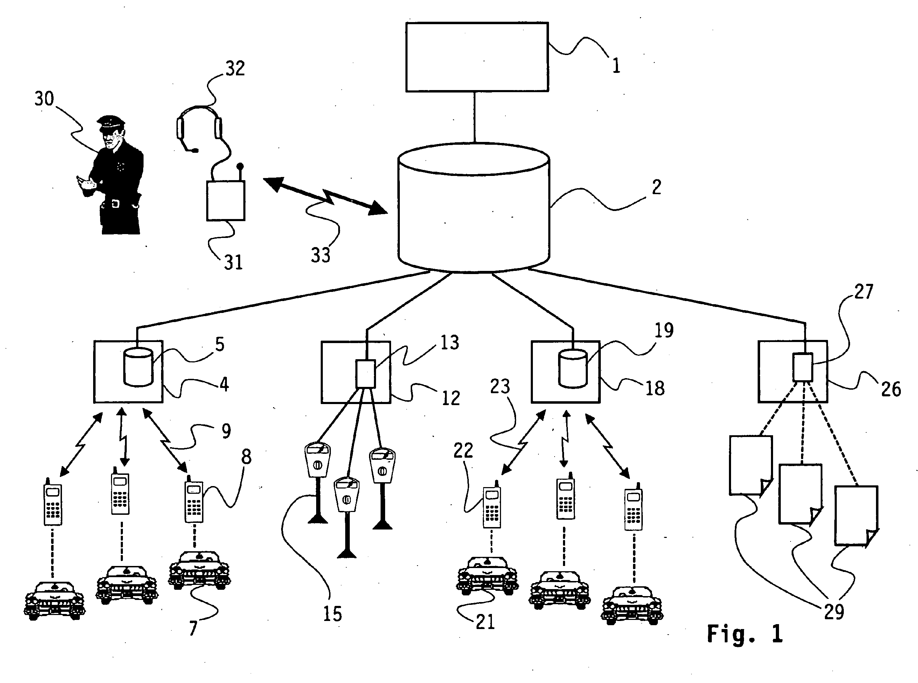

In figure 1 a parking management party who owns or who is authorized to issue parking rights, such as city counsel 1, is owner of a parking database 2. Employees working at the city counsel 1 may consult parking database 2 using a computer (not shown) and a connection through a telecommunication network such as an intranet or the internet (not shown).

In the present example, the city counsel 1 does not provide the individually issued parking rights to users themselves, but delegates this task to a plurality of parking operators 4, 12, 18, 26. The city counsel 1 therefore issues the parking rights, and uses a provisioning or distribution system for providing the parking rights through a plurality of parking operators 4, 12, 18, 26. In return for issuing a parking right, the city counsel receives a parking tax or official parking fee from the parking operator providing the parking right to a user. In addition, the parking operator 4, 12, 18, 26 may request from a user, in return for providing the parking right, a payment amount consisting of the official parking fee to be paid to the city counsel 1 and an additional operator fee covering expenses and providing income to the parking operator 4, 12, 18, 26. As will be understood, the operator fee is optional.

Each of the operators 4, 12, 18, 26 is connected to the parking database 2. The operators 4, 12, 18, 26 and the services or service level they provide to their users, are of different nature.

Parking operator 4, just as parking operator 18, provides a mobile phone assisted parking service to its users. Users may have a subscription with parking operator 4 and, as is schematically indicated in the figure, when a user wants to park his car 7 he makes a telephone call (schematically indicated by double arrow 9) with his mobile telephone 8 to a telephone number of the parking operator. Alternatively he may send a short messaging service (SMS)-message, or the like. Through the wireless connection 9, the user may provide identification details of his vehicle 7, e.g. by typing in his license plate number on his mobile phone 8. In addition, he may provide an indication of the location where his vehicle 7 is parked, and/or the desired or intended duration of the parking activity (e.g. in terms of starting time and ending time). These details may be registered by parking operator 4 in an operator database 5, however the use of such an operator database 5 is only optional.

Parking operator 18 offers to his customers a similar service as parking operator 4: a customer may be subscribed to parking operator 18 and may park his car 21 in a certain area by making a telephone call 23 with a mobile phone 22 to a dedicated number of the parking operator 18. The database 19 is an operator database of parking operator 18 wherein details of the provided parking rights or details of the customer (or the like) are stored.

Other parking operators, such as parking operator 12 may exploit a plurality of parking metres or parking ticket dispensing machines, such as parking metre 15. These parking metres (15) may be connected to a central server 13 of the parking operator 12. The central server 13 is, in the present example, connected to parking database 2 via a telecommunication network (not shown).

Alternatively, parking operator 26 may be embodied by the department of the city counsel 1 authorised to provide parking licenses, schematically indicated by papers 29, to users. The parking licenses provided may be registered using a central server 27 connected to the parking database 2. It will be understood that each of the servers and databases (5, 13, 19, 27) of the parking operators 4, 12, 18 and 26 may be connected with each other or with other servers and databases for information or management purposes. For simplicity, and for increasing intelligibility of the figure, any further connection between systems of each of the operators 4, 12, 18 and 26 with any other operator or any other party are not shown in the figure.

When a parking right is provided to a user, such as the provisioning of a parking license 92 by parking operator 26 to a user, parking right data is forwarded to the parking database 2 (in the present example by server 27) where it is stored. Parking operator 26 may for example store the parking license number of the license provided, license plate number of the vehicle for which the parking license is issued, validity data of the parking license such as starting date, starting time, ending date and ending time, area or partial area for which the parking is valid (e.g. only within a certain neighbourhood in the city) personal identification details of the person to whom the parking license is issued, etc.

In order to enforce the parking policy, the police or a dedicated department of the city counsel, or another enforcement party, is authorised to verify the validity or existence of parking rights of parked vehicles in the city. A traffic warden 30 working for such an enforcement party, may want to verify the existence of a valid parking right for car 21 parked alongside the street. As described above, car 21 has been parked using a mobile phone assisted parking service, by the user making a phone call 23 using his mobile phone 22 to a telephone number of parking operator 18.

Suppose that vehicles are only allowed to park for limited amount of time (e.g. two hours) in the area where car 21 is parked. By making the parking request with his mobile phone 22, the user triggered in database 2 the recording of a starting time of the parking right, e.g. at 13:06 p.m. The traffic warden 30 arrives at car 21, e.g. at 15:53 p.m., and wants to verify whether car 21 is validly parked. Traffic warden 30 uses a mobile querying device 31 in accordance with the present invention, which enables him to make a wireless connection 33 with database 2 to verify whether or not a parking right for car 21 exist within database 2 or whether or not an existing parking right is still valid. The mobile querying device 31 is connected with a headset 32 which is worn by the traffic warden 30. The traffic warden 30 reads out the licence plate number of car 21. The spoken licence plate number of the car 21 is received in the mobile querying device 31 as a voice signal from headset 32. Voice recognition means (not shown) within mobile querying device 31 analyse the voice signal received from the headset 32, and a sample the licence plate number, e.g. in ASCII characters. Optionally, the license plate number may be shown on a small screen (not shown) on mobile querying device 31 to the traffic warden 30, to verify whether or not the license plate number has been received correctly.

After confirmation by the traffic warden 30, the license plate number is forwarded via wireless GPRS (General Packet Radio Service) connection 33 to database 2 by wireless communication means (not shown) of device 31. Parking database 2 may forward the requested parking data available in the database 2 back to device 31, where it is revealed to traffic warden 30 on a small screen (not shown). Alternatively, the database 2 may simply send a signal true or false, providing an indication on whether or not a valid parking right exists for car 21 in database 2. The vehicle related information received from parking database 2, may be used by device 31 for assembling a speech signal. This speech signal can be sent as output to the headset 32, and the traffic warden will be provided with the requested parking details for vehicle 21.

In the present case, a parking right for car 21 for parking it at a location where it is presently parked, has existed in the past, but ceased to be valid on 15:06 p.m. The traffic warden 30 notes that no valid parking right exists for car 21 and writes a ticket for car 21 including a parking fine, or an extra tax for administration purposes. This may be reported back by traffic warden 30 to the city counsel, or may be recorded in the parking database 2 via wireless connection 33.

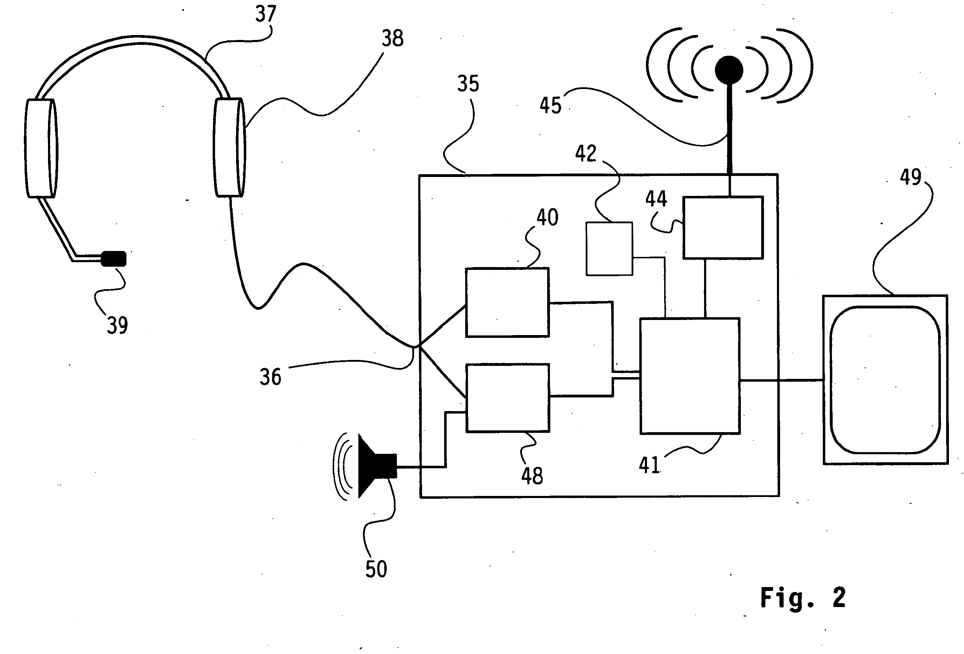

Figure 2 is a schematic view of the mobile querying device of the present invention. The mobile querying device 35 comprises an in- and output 36 to which a headset 37 is connected. The headset 37 consists of loudspeakers 38, and a microphone 39 for a traffic warden.

A traffic warden using mobile querying device 35, may wear headset 37, and may read out licence plates numbers through microphone 39. The voice signal from microphone 39 will be provided via input 36 to voice recognition means 40. Voice recognition means 40 are arranged for analysing the voice signal received from microphone 39, and for assembling digital data (such as a license plate number or for example specific instructions) based on voice signals received from microphone 39. The digital data from the voice recognition means 40 is provided to control means 41 of the mobile querying device. Optionally, mobile querying device 35 may be connected to display means 49. In this case, the control means 41 may provide the digital data received from voice recognition means 40 to display means 49, in order to display the license plate number to the traffic warden using mobile querying device 35. The traffic warden may verify whether or not the license plate number provided to mobile querying device via headset 37 is received correctly. In that case, a confirmation instruction may be provided via headset 37 to the mobile querying device 35.

After having received the license plate number as digital data correctly, control means 41 provide the signal to transmission means 44, which are arranged for setting up a GPRS connection with a parking database. The data signal is transmitted via de GPRS connection through antenna 45 of the mobile querying device to the parking database. In response to sending the license plate number to the parking database, the mobile querying device 35 receives a digital signal from the database, corresponding to a record in the database. For example, the digital signal may include an indication whether the valid parking right exists for the vehicle identified.

Optionally, the mobile querying device 35 may be provided with positioning means, such as global positioning system (GPS) module 42. Such positioning means provide position information to the control means, which may be sent along to the parking database together with the license plate number of the vehicle queried. In this case, the response from the parking database may provide an indication whether a valid parking right exists for the vehicle within the location specified. Other details of the vehicle or the parking right may also be provided by the database, as will be appreciated by the skilled person.

The information received from the database is provided to the control means 41 of the mobile querying device 35. This information may be provided to display means 49, but advantageously, it is provided to the headset 37 via speech assembling means 48. Speech assembling means 48 receives the digital data from the control means 41, and assembles a speech signal based on the dat received, which is sent as an output signal via output 36 to headset 37, in particular loudspeaker 38 thereof. This way, the information is received by the traffic warden in such a way that mobile querying device can be used hands free. Another option is the use of loudspeaker 50 connected directly to the mobile querying device 35. Additional details may be provided to the traffic warden in the same manner, or can be provided via display means 49.

Transmission means 44 are arranged for measuring the signal strength of the GPRS signal, and are arranged to transmit an indication to the control means 41 when the received communication signal from the GPRS network is too weakl, or not available at all. In this case, control means 41 may be arranged to send an instruction to transmission means 44 to set up a regular GSM connection (GSM = Global System for Mobile Communications). The GSM connection is a regular telephone connection with the parking database, which may either be used by the control unit 41 to send digital data to the parking database, or alternatively, the control means 41 may send the voice signal received from microphone 39 of the headset 37 directly over the telephone connection to parking database, where it is analysed and translated into a license plate number.

The control means 41 may be connected to an internal memory (not shown) of the mobile querying device, and in response to receiving an indication from transmission means 44 that the GPRS signal becomes to weak, the control means may provide an instruction to the parking database to send as much as possible database records to the mobile querying device, e.g. for an area identified by the positioning means 42 of the mobile querying tool. These records are transmitted by the parking database to the mobile querying device, and are stored in the internal memory. The internal memory may be used as temporal local database for the querying device when the GPRS signal is to weak, or where there is no GPRS coverage at all.

Additionally, the mobile querying device may store positions of locations where there is no or hardly any GPRS coverage in the internal memory, and re-use this information as soon as the area is entered a second or further time. In that case, when the area of bad GPRS coverage is approached, the mobile querying device may already start downloading database records for the area approaching.

It will be appreciated that numerous modifications and verifications of the present invention are possible in the light of the above teachings. It is therefore understood that within the scope of the appended claims, the invention may be practised otherwise than is specifically described herein.

## Claims

1. Method of retrieving vehicle related information from a parking right database (2), said method comprising the steps of:
providing vehicle identification data of a vehicle (7) to a mobile querying device (31), said mobile querying device (31) being arranged for remotely accessing said parking right database (2);
remotely and digitally providing said vehicle identification data to said parking right database (2) through a data telecommunications network, using said mobile querying device (31), for retrieving said vehicle related information from said parking right database (2);
wherein for providing said vehicle identification data to said mobile querying device (31), a voice signal is provided to said mobile querying device (31), and said mobile querying device (31) assembles said vehicle identification data by analysing said voice signal;
said method **characterized by** a step of:
providing location information to said mobile querying device (31); and
said mobile querying device (31), in dependence of a communication signal strength of a communication signal received from said data telecommunications network when said communication signal strength is smaller than a threshold value, sending a request to said parking right database (2) for receiving a plurality of database records from said parking right database (2), wherein said plurality of database records comprise database records for an area associated with said location information.

2. Method according to claim 1, wherein said vehicle identification data is assembled by said mobile querying device (31) by means of speech recognition of said voice signal.

3. Method according to any of the previous claims, wherein said vehicle related information is provided by said parking right database (2) in the form of digital parking right data.

4. Method according to claim 3, wherein an output speech signal is assembled by said mobile querying device (31) based on said digital parking right data, for providing said vehicle related information to a user of said mobile querying device (31).

5. Method according to any of the previous claims, wherein said data telecommunications network is a packed switched data communications network.

6. Method according to any of the previous claims, wherein said location information is provided to said mobile querying device by positioning means (42) included in said mobile querying device.

7. Method according to claim 6, wherein said positioning means (42) are satellite based positioning means (42), such as global positioning system GPS or Galileo,

8. Method according to any of the previous claims, wherein said location information is included in said voice signal provided to said mobile querying device (31).

9. Method according any of the claims any of the previous claims, wherein said plurality of database records are stored by said mobile querying device (31) in a local database, and wherein said vehicle related information is retrieved by said mobile querying device (31) from said local database, when said communication signal strength is smaller than said threshold value.

10. Method according to any of the previous claims, wherein when a communication signal strength of a communication signal received from said data telecommunications network is smaller than a threshold value, a mobile telephone call is set-up by said mobile querying device (31) through a voice telecommunications network, for providing said vehicle identification data to said parking right database (2), and for retrieving said vehicle related information from a parking right database (2).

11. Method according to claim 10, wherein said telephone call is a call based on global system for mobile communication GSM.

12. Mobile querying device (31) adapted for carrying out a method according to any of the claims 1-11, said mobile querying device comprising means (44) for remotely accessing a parking right database (2) for retrieving vehicle related information from said database (2), said means (44) for remotely accessing said parking right database (2) being further arranged for digitally providing vehicle identification data to said parking right database (2), wherein said mobile querying device (31) comprises means (39) for receiving a voice signal from a user of said device (31), and means (40) for assembling said vehicle identification data by analysing said voice signal, **characterized in that**, said mobile querying device comprises means for receiving or acquiring location information for said mobile querying device, and said mobile querying device further comprises means for sending a request to said parking right database (2) for receiving a plurality of database records from said parking right database (2) when a communication signal strength of a communication signal received from said data telecommunications network is smaller than a threshold value, wherein said plurality of database records comprise database records for an area associated with said location information.

13. Mobile querying device (31) according to claim 12, wherein said means (40) for assembling said vehicle identification data comprise speech recognition means (40).

14. Mobile querying device (31) according to any of the claims 12 or 13 further comprising means (41, 45) for receiving digital parking right data from said parking right database (2).

15. Mobile querying devices (31) according to claim 17, further comprising means (48) for assembling an output speech signal based on said digital parking right data.

16. Mobile querying device according to claims 12-15, wherein said means (42) for receiving or acquiring location information comprises positioning means (42), in particular satellite based positioning means (42), such as global positioning system GPS or Galileo.

17. Mobile querying device (31) according to any of the claims 12-16, further comprising means (44) for measuring a communication signal strength of a communication signal received from said data telecommunications network.

18. Mobile querying device (31) according to any of the claims 12-17, further comprising means for storing a plurality of database records received from said parking right database (2), for maintaining a local database.

19. Mobile querying device (31) according to any of the claims according to any of the claims 12-18, further comprising means (44) for setting up a telephone call for providing said vehicle identification data to said parking right database (2), and for receiving said vehicle related information from said parking right database (2),

20. Mobile querying device (31) according to claim 19, wherein said means (44) for setting a telephone call are arranged for setting up a call based on global systems for mobile communication GSM.

## Patentansprüche

1. Verfahren zum Abrufen fahrzeugbezogener Informationen aus einer Parkrechtdatenbank (2), wobei das Verfahren die folgenden Schritte umfasst:
einer mobilen Abfragevorrichtung (31) werden Fahrzeugkenndaten eines Fahrzeugs (7) zur Verfügung gestellt, wobei die mobile Abfragevorrichtung (31) für Fernzugriff auf die Parkrechtdatenbank (2) eingerichtet ist;
die Fahrzeugkenndaten werden der Parkrechtdatenbank (2) über ein Datenfernübertragungsnetz unter Verwendung der mobilen Abfragevorrichtung (31) zum Abrufen der fahrzeugbezogenen Informationen aus der Parkrechtdatenbank (2) fern und digital zur Verfügung gestellt;
wobei ein Sprachsignal an die mobile Abfragevorrichtung (31) geliefert wird, um der mobilen Abfragevorrichtung (31) die Fahrzeugkenndaten zur Verfügung zu stellen, und die mobile Abfragevorrichtung (31) die Fahrzeugkenndaten durch Auswertung des Sprachsignals zusammensetzt;
wobei das Verfahren durch einen Schritt **gekennzeichnet** ist, bei dem
der mobilen Abfragevorrichtung (31) Standortinformationen zur Verfügung gestellt werden; und
die mobile Abfragevorrichtung (31) je nach einer Übertragungssignalstärke eines von dem Datenfernübertragungsnetz empfangenen Übertragungssignals dann, wenn die Übertragungssignalstärke unter einem Schwellenwert liegt, eine Anforderung an die Parkrechtdatenbank (2) sendet, um mehrere Datenbanksätze von der Parkrechtdatenbank (2) zu erhalten, wobei in den mehreren Datenbanksätzen Datenbanksätze für ein zu den Standortinformationen zugehöriges Gebiet enthalten sind.

2. Verfahren nach Anspruch 1, bei dem die Fahrzeugkenndaten von der mobilen Abfragevorrichtung (31) mittels Spracherkennung des Sprachsignals zusammengesetzt werden.

3. Verfahren nach einem der vorhergehenden Ansprüche, bei dem die fahrzeugbezogenen Informationen in Form von digitalen Parkrechtdaten von der Parkrechtdatenbank (2) zur Verfügung gestellt werden.

4. Verfahren nach Anspruch 3, bei dem von der mobilen Abfragevorrichtung (31) anhand der digitalen Parkrechtdaten ein Ausgangssprachsignal zusammengesetzt wird, um die fahrzeugbezogenen Informationen einem Benutzer der mobilen Abfragevorrichtung (31) zur Verfügung zu stellen.

5. Verfahren nach einem der vorhergehenden Ansprüche, bei dem das Datenfernübertragungsnetz ein paketvermittelndes Datenübertragungsnetz ist.

6. Verfahren nach einem der vorhergehenden Ansprüche, bei dem die Standortinformationen der mobilen Abfragevorrichtung durch Positionsbestimmungsmittel (42) zur Verfügung gestellt werden, die in der mobilen Abfragevorrichtung enthalten sind.

7. Verfahren nach Anspruch 6, bei dem die Positionsbestimmungsmittel (42) satellitengestützte Positionsbestimmungsmittel (42) wie etwa das Globale Positionsbestimmungssystem GPS oder Galileo sind.

8. Verfahren nach einem der vorhergehenden Ansprüche, bei dem die Standortinformationen in dem an die mobile Abfragevorrichtung (31) gelieferten Sprachsignal enthalten sind.

9. Verfahren nach einem der vorhergehenden Ansprüche, bei dem die mehreren Datenbanksätze von der mobilen Abfragevorrichtung (31) in einer lokalen Datenbank gespeichert werden und die fahrzeugbezogenen Informationen von der mobilen Abfragevorrichtung (31) aus der lokalen Datenbank abgerufen werden, wenn die Übertragungssignalstärke unter dem Schwellenwert liegt.

10. Verfahren nach einem der vorhergehenden Ansprüche, bei dem dann, wenn eine Übertragungssignalstärke eines von dem Datenfernübertragungsnetz empfangenen Übertragungssignals unter einem Schwellenwert liegt, von der mobilen Abfragevorrichtung (31) über ein Sprachfernübertragungsnetz eine Mobiltelefonverbindung aufgebaut wird, um der Parkrechtdatenbank (2) die Fahrzeugkenndaten zur Verfügung zu stellen und die fahrzeugbezogenen Informationen aus einer Parkrechtdatenbank (2) abzurufen.

11. Verfahren nach Anspruch 10, bei dem die Telefonverbindung eine auf dem Globalen System für Mobile Kommunikation GSM beruhende Verbindung ist.

12. Mobile Abfragevorrichtung (31), die zur Durchführung eines Verfahrens nach einem der Ansprüche 1 bis 11 eingerichtet ist, wobei die mobile Abfragevorrichtung Mittel (44) für Fernzugriff auf eine Parkrechtdatenbank (2) zum Abrufen fahrzeugbezogener Informationen aus der Datenbank (2) umfasst, wobei die Mittel (44) für Fernzugriff auf die Parkrechtdatenbank (2) ferner so ausgelegt sind, dass der Parkrechtdatenbank (2) Fahrzeugkenndaten digital zur Verfügung gestellt werden, wobei die mobile Abfragevorrichtung (31) Mittel (39) zum Empfangen eines Sprachsignals von einem Benutzer der Vorrichtung (31) sowie Mittel (40) aufweist, mit denen die Fahrzeugkenndaten durch Auswertung des Sprachsignals zusammengesetzt werden, **dadurch gekennzeichnet, dass** die mobile Abfragevorrichtung Mittel zum Empfangen bzw. Erfassen von Standortinformationen für die mobile Abfragevorrichtung aufweist und die mobile Abfragevorrichtung ferner Mittel zum Senden einer Anforderung an die Parkrechtdatenbank (2) aufweist, um mehrere Datenbanksätze von der Parkrechtdatenbank (2) zu erhalten, wenn eine Übertragungssignalstärke eines von dem Datenfernübertragungsnetz empfangenen Übertragungssignals unter einem Schwellenwert liegt, wobei in den mehreren Datenbanksätzen Datenbanksätze für ein zu den Standortinformationen zugehöriges Gebiet enthalten sind.

13. Mobile Abfragevorrichtung (31) nach Anspruch 12, bei der die Mittel (40), mit denen die Fahrzeugkenndaten zusammengesetzt werden, Spracherkennungsmittel (40) umfassen.

14. Mobile Abfragevorrichtung (31) nach einem der Ansprüche 12 oder 13, ferner mit Mitteln (41, 45) zum Empfangen digitaler Parkrechtdaten aus der Parkrechtdatenbank (2).

15. Mobile Abfragevorrichtung (31) nach Anspruch 17, ferner mit Mitteln (48), mit denen anhand der digitalen Parkrechtdaten ein Ausgangssprachsignal zusammengesetzt wird.

16. Mobile Abfragevorrichtung nach den Ansprüchen 12 bis 15, bei der das Mittel (42) zum Empfangen bzw. Erfassen von Standortinformationen Positionsbestimmungsmittel (42), insbesondere satellitengestützte Positionsbestimmungsmittel (42) wie etwa das Globale Positionsbestimmungssystem GPS oder Galileo, umfasst.

17. Mobile Abfragevorrichtung (31) nach einem der Ansprüche 12 bis 16, ferner mit Mitteln (44) zur Messung einer Übertragungssignalstärke eines von dem Datenfernübertragungsnetz empfangenen Übertragungssignals.

18. Mobile Abfragevorrichtung (31) nach einem der Ansprüche 12 bis 17, ferner mit Mitteln zur Speicherung mehrerer von der Parkrechtdatenbank (2) erhaltener Datenbanksätze zum Unterhalten einer lokalen Datenbank.

19. Mobile Abfragevorrichtung (31) nach einem der Ansprüche 12 bis 18, ferner mit Mitteln (44) zum Aufbauen einer Telefonverbindung, um der Parkrechtdatenbank (2) die Fahrzeugkenndaten zur Verfügung zu stellen und die fahrzeugbezogenen Informationen aus der Parkrechtdatenbank (2) zu erhalten.

20. Mobile Abfragevorrichtung (31) nach Anspruch 19, bei der die Mittel (44) zum Aufbauen einer Telefonverbindung so ausgelegt sind, dass sie eine auf dem Globalen System für Mobile Kommunikation GSM beruhende Verbindung aufbauen.

## Revendications

1. Procédé de récupération d'informations concernant un véhicule auprès d'une base de données de droits de stationnement (2), ledit procédé comprenant les étapes selon lesquelles :
des données d'identification de véhicule concernant un véhicule (7) sont fournies à un dispositif d'interrogation mobile (31), ledit dispositif d'interrogation mobile (31) étant adapté pour accéder à distance à ladite base de données de droits de stationnement (2) ;
lesdites données d'identification de véhicule sont télétransmises numériquement à ladite base de données de droits de stationnement (2), via un réseau de télécommunication de données, au moyen dudit dispositif d'interrogation mobile (31), pour permettre la récupération desdites informations concernant le véhicule auprès de ladite base de données de droits de stationnement (2) ;
où, pour la fourniture desdites données d'identification de véhicule audit dispositif d'interrogation mobile (31), un signal vocal est envoyé audit dispositif d'interrogation mobile (31) et ledit dispositif d'interrogation mobile (31) assemble lesdites données d'identification de véhicule en analysant ledit signal vocal ;
ledit procédé étant **caractérisé par** les étapes selon lesquelles :
des informations de localisation sont fournies audit dispositif d'interrogation mobile (31) ; et
ledit dispositif d'interrogation mobile (31), en fonction de l'intensité de signal communication d'un signal de communication reçu dudit réseau de télécommunication de données, lorsque ladite intensité du signal de communication est inférieure à une valeur seuil, envoie à ladite base de données de droits de stationnement (2) une demande de réception d'une pluralité d'enregistrements de base de données en provenance de ladite base de données de droits de stationnement (2), ladite pluralité d'enregistrements de base de données comprenant des enregistrements de base de données concernant une zone associée auxdites informations de localisation.

2. Procédé selon la revendication 1, dans lequel lesdites données d'identification de véhicule sont assemblées par ledit dispositif d'interrogation mobile (31) au moyen d'une reconnaissance vocale appliquée audit signal vocal.

3. Procédé selon l'une quelconque des revendications précédentes, dans lequel lesdites informations concernant le véhicule sont fournies par ladite base de données de droits de stationnement (2) sous la forme de données de droit de stationnement numériques.

4. Procédé selon la revendication 3, dans lequel un signal de sortie vocal est assemblé par ledit dispositif d'interrogation mobile (31) à partir desdites données de droit de stationnement numériques, pour fournir lesdites informations concernant le véhicule à un utilisateur dudit dispositif d'interrogation mobile (31).

5. Procédé selon l'une quelconque des revendications précédentes, dans lequel ledit réseau de télécommunication de données est un réseau de communication de données à commutation de paquets.

6. Procédé selon l'une quelconque des revendications précédentes, dans lequel lesdites informations de localisation sont fournies audit dispositif d'interrogation mobile par des moyens de positionnement (42) inclus dans ledit dispositif d'interrogation mobile.

7. Procédé selon la revendication 6, dans lequel lesdits moyens de positionnement (42) sont des moyens de positionnement par satellite (42), tels que le système mondial de positionnement GPS ou Galileo.

8. Procédé selon l'une quelconque des revendications précédentes, dans lequel lesdites informations de localisation sont incluses dans ledit signal vocal fourni audit dispositif d'interrogation mobile (31).

9. Procédé selon l'une quelconque des revendications précédentes, dans lequel ladite pluralité d'enregistrements de base de données est stockée par ledit dispositif d'interrogation mobile (31) dans une base de données locale, et dans lequel lesdites informations concernant le véhicule sont récupérées par ledit dispositif d'interrogation mobile (31) auprès de ladite base de données locale lorsque ladite intensité du signal de communication est inférieure à ladite valeur seuil.

10. Procédé selon l'une quelconque des revendications précédentes, dans lequel, lorsque l'intensité de signal de communication d'un signal de communication reçu dudit réseau de télécommunication de données est inférieure à ladite valeur seuil, une communication de téléphonie mobile est établie par ledit dispositif d'interrogation mobile (31) via un réseau de télécommunication téléphonique, pour l'envoi desdites données d'identification de véhicule à ladite base de données de droits de stationnement (2) et la récupération desdites informations concernant le véhicule auprès de la base de données de droits de stationnement (2).

11. Procédé selon la revendication 10, dans lequel ladite communication téléphonique est une communication basée sur un système mondial de communication avec les mobiles GSM.

12. Dispositif d'interrogation mobile (31) adapté pour exécuter un procédé selon l'une quelconque des revendications 1 à 11, ledit dispositif d'interrogation mobile comprenant des moyens (44) pour accéder à distance à une base de données de droits de stationnement (2) afin de récupérer des informations concernant un véhicule auprès de ladite base de données (2), lesdits moyens (44) pour l'accès à distance à ladite base de données de droits de stationnement (2) étant en outre adaptés pour fournir des données d'identification de véhicule sous forme numérique à ladite base de données de droits de stationnement (2), ledit dispositif d'interrogation mobile (31) comprenant des moyens (39) pour recevoir un signal vocal d'un utilisateur dudit dispositif (31), et des moyens (40) pour assembler lesdites données d'indentification de véhicule par l'analyse dudit signal vocal, **caractérisé en ce que** ledit dispositif d'interrogation mobile comprend des moyens pour recevoir ou acquérir des informations de localisation concernant ledit dispositif d'interrogation mobile, et ledit dispositif d'interrogation mobile comprend, en outre, des moyens pour envoyer à ladite base de données de droits de stationnement (2) une demande de réception d'une pluralité d'enregistrements de base de données en provenance de ladite base de données de droits de stationnement (2) lorsque l'intensité de signal de communication d'un signal de communication reçu dudit réseau de télécommunication de données est inférieure à une valeur seuil, ladite pluralité d'enregistrements de base de données comprenant des enregistrements de base de données concernant une zone associée auxdites informations de localisation.

13. Dispositif d'interrogation mobile (31) selon la revendication 12, dans lequel lesdits moyens (40) pour l'assemblage desdites données d'identification de véhicule comprennent des moyens de reconnaissance vocale (40).

14. Dispositif d'interrogation mobile (31) selon l'une quelconque des revendications 12 ou 13, comprenant en outre des moyens (41, 45) pour recevoir des données de droit de stationnement numériques en provenance de ladite base de données de droits de stationnement (2).

15. Dispositif d'interrogation mobile (31) selon la revendication 17, comprenant en outre des moyens (48) pour assembler un signal de sortie vocal à partir desdites données de droit de stationnement numériques.

16. Dispositif d'interrogation mobile selon l'une quelconque des revendications 12 à 15, dans lequel lesdits moyens (42) pour recevoir ou acquérir des informations de localisation comprennent des moyens de positionnement (42), en particulier des moyens de positionnement par satellite (42), tels que le système mondial de positionnement GPS ou Galileo.

17. Dispositif d'interrogation mobile (31) selon l'une quelconque des revendications 12 à 16, comprenant en outre des moyens (44) pour mesurer l'intensité de signal de communication d'un signal de communication reçu dudit réseau de télécommunication de données.

18. Dispositif d'interrogation mobile (31) selon l'une quelconque des revendications 12 à 17, comprenant en outre des moyens pour stocker une pluralité d'enregistrements de base de données reçus de ladite base de données de droits de stationnement (2), permettant de tenir à jour une base de données locale.

19. Dispositif d'interrogation mobile (31) selon l'une quelconque des revendications 12 à 18, comprenant en outre des moyens (44) pour établir une communication téléphonique pour l'envoi desdites données d'identification de véhicule à ladite base de données de droits de stationnement (2) et la réception desdites informations concernant le véhicule en provenance de la base de données de droits de stationnement (2).

20. Dispositif d'interrogation mobile (31) selon la revendication 19, dans lequel lesdits moyens (44) pour établir une communication téléphonique sont adaptés pour établir une communication basée sur un système mondial de communication avec les mobiles GSM.
